Europäisches Patentamt

European Patent Office

Office européen des brevets

(19)

(11) Veröffentlichungsnummer: **0 255 920**
**B1**

(12) EUROPÄISCHE PATENTSCHRIFT

(45) Veröffentlichungstag der Patentschrift:
26.09.90

(51) Int. Cl.⁵: **F04C 18/344, F04C 29/08**

(21) Anmeldenummer: 87111020.1

(22) Anmeldetag: 30.07.87

(54) Flügelzellenvakuumpumpe.

(30) Priorität: 06.08.86 DE 3626609
24.01.87 DE 3702070

(73) Patentinhaber: **B a r m a g AG**, Leverkuser
**Strasse 65 Postfach 110 240, D-5630 Remscheid 11(DE)**

(43) Veröffentlichungstag der Anmeldung:
**17.02.88 Patentblatt 88/7**

(72) Erfinder: **Hertell, Siegfried, Am Kattenbusch 22a,
D-5608 Radevormwald(DE)**
Erfinder: **Lange, Robert, Ritter-von-Halt-Strasse 6,
D-5608 Radevormwald(DE)**

(45) Bekanntmachung des Hinweises auf die Patenterteilung:
**26.09.90 Patentblatt 90/39**

(74) Vertreter: **Pfingsten, Dieter, Dipl.-Ing., Barmag AG
Leverkuser Strasse 65 Postfach 110240,
D-5630 Remscheid 11(DE)**

(84) Benannte Vertragsstaaten:
**AT DE ES FR GB IT SE**

(56) Entgegenhaltungen:
DE-A- 3 444 859
US-A- 3 723 024

## Beschreibung

Die Erfindung betrifft eine Flügelzellenpumpe nach dem Oberbegriff des Anspruchs.

Eine Flügelzellenpumpe dieser Bauart, die als Kompressor dient, ist durch die US-A 3 723 024 bekannt. Zum Betrieb dieser Pumpe ist der Rotor wahlweise in der einen oder der anderen Drehrichtung antreibbar. Dadurch wird der Einlaßkanal durch eine drehbare Steuerscheibe, die mit dem Rotor reibschlüssig verbunden ist, verlagert.

Flügelzellenvakuumpumpen werden insbesondere für Dieselmotoren eingesetzt. Dabei besteht das Problem, daß ein Dieselmotor u.U. auch mit Rückwärtslauf angelassen werden kann. Es ist in diesem Falle umso wichtiger, daß der Bremskraftverstärker, der an die Flügelzellenvakuumpumpe angeschlossen ist, funktionsfähig ist, daß mit anderen Worten auch bei Rückwärtslauf durch die Flügelzellenvakuumpumpe ein ausreichendes Vakuum erzeugt wird.

Die bekannte Lösung ist dafür ungeeignet, weil bei Rückwärtslauf der Flügelzellenvakuumpumpe die Strömungsrichtung nicht umgekehrt werden darf.

Aufgabe der Erfindung ist es, eine Flügelzellenvakuumpumpe so auszulegen, daß der Servoverbraucher auch bei Rückwärtslauf in ausreichender Weise mit einem Vakuum beaufschlagt werden kann.

Die Lösung ergibt sich aus dem Kennzeichen des Anspruchs. Durch diese Lösung wird auch bei Rückwärtslauf verhindert, daß ein Druck der Flügelzellen, welcher höher ist als der zuvor in dem Bremskraftverstärker erzeugte Druck, auf dem Bremskraftverstärker erzeugte Druck, auf den Bremskraftverstärker zurückwirkt. Ferner ergibt sich der Vorteil, daß bei Stillstand der Pumpe das Vakuum im Bremskraftverstärker nicht durch Leckagen innerhalb der Pumpe abgebaut wird.

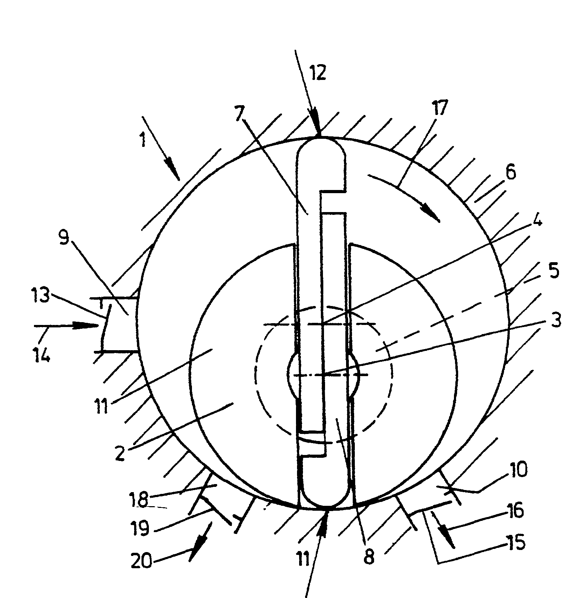

Im folgenden wird ein Ausführungsbeispiel anhand der Zeichnung beschrieben.

Dargestellt ist eine Flügelzellenpumpe im Querschnitt (schematisch). Die Flügelzellenpumpe 1 besitzt eine Gehäuse 6. In dem Gehäuse 6 ist der Rotor 2 mit Welle 5 drehbar gelagert. Dabei sitzt die Achse 3 des Rotors exzentrisch zum Mittelpunkt 4 des kreiszylindrischen Gehäuses 6. Der Rotor besitzt einen durchgehenden Schlitz, der sich über die gesamte axiale Länge des Rotors erstreckt. Die entstehenden beiden Hälften des Rotors werden durch die gestrichelt angedeutete Welle 5 des Rotors zusammengehalten. In dem Schlitz des Rotors sind die Flügel 7 und 8 gleitend geführt. Dabei sind die Flügel hakenförmig ausgebildet. Die Hakendicke ist gleich der Summe der Flügeldicke. Die Flügel liegen mit ihren Seitenflächen gleitend aufeinander. Einzelheiten hierzu sind z.B. in der DE- 3 444 859 (= Bag. 1372) beschrieben.

Die Betriebsdrehrichtung des Rotors ist mit 17 bezeichnet.

Das Gehäuse 6 besitzt einen Einlaßkanal 9 und einen Auslaßkanal 10. Der Einlaßkanal 9 ist mit einem Bremskraftverstärker verbunden. Der Einlaßkanal 9 mündet in einem Bereich in das Gehäuse 6, der zwischen dem unteren Totpunkt 11 und dem oberen Totpunkt 12 liegt. Als unterer Totpunkt wird hier die Mantellinie des Gehäuses 6 bezeichnet, in dem der Rotor 2 und das Gehäuse 6 ihren kleinsten Abstand haben – im gezeigten Ausführungsbeispiel – sich berühren. Der obere Totpunkt 12 ist dementsprechend die Mantellinie des Gehäuses 6, die den größten Abstand von dem Rotormantel hat. Im dargestellten Fall liegt der Ansaugkanal 9 bei etwa 90° zwischen dem unteren Totpunkt und dem oberen Totpunkt. In dem Ansaugkanal 9 sitzt ein Rückschlagventil 13, das in der angezeigten Saugrichtung 14 öffnet und in der Gegenrichtung schließt.

Der Auslaßkanal 10 sitzt im Bereich - in Drehrichtung 17 - kurz vor dem unteren Totpunkt 11. Der Auslaßkanal 10 ist durch das Rückschlagventil 15 gesichert. Rückschlagventil 15 öffnet den Auslaßkanal in der angezeigten Auslaßrichtung 16.

Der Auslaßkanal 10 mündet üblicherweise in das Kurbelgehäuse des Kraftfahrzeugmotors. Dadurch wird es ermöglicht, daß das Schmieröl des Kraftfahrzeugs auch zur Schmierung der Vakuumpumpe benutzt und mit seinen Überschußmengen in das Kurbelgehäuse des Kraftfahrzeugmotors zurückgeführt werden kann. Bei der vorgegebenen Betriebsdrehrichtung 17 des Rotors - hinter dem unteren Totpunkt 11 - sitzt ein weiterer Auslaßkanal 18, der vorzugsweise ebenfalls in das Kurbelgehäuse des Kraftfahrzeugmotors mündet. Dieser Auslaßkanal ist ebenfalls durch ein Rückschlagventil 19 gesichert, das lediglich bei der angezeigten Auslaßrichtung 20 öffnet.

Zur Funktion:

Bei Betriebsdrehrichtung 17 des Rotors bilden die Flügel 7 und 8 in dem Gehäuse 6 sichelförmige Zellen, die sich ständig vergrößern und verkleinern. In dem Drehbereich des Rotors, in dem eine Vergrößerung der Zellen stattfindet, liegt der Ansaugkanal 13. Daher wird durch den Ansaugkanal 13 ein Vakuum gezogen. In dem Bereich, in dem sich die Zellen verkleinern, liegt der Auslaßkanal 10, durch den Luft ausgedrückt wird, wenn der Luftdruck in der Zelle den Luftdruck vor dem Rückschlagventil 15 übersteigt. In dem Gehäuse 6 der Flügelzellenpumpe herrscht also nach einigen Umdre hungen des Rotors bereits ein Vakuum, das infolge der Sicherung des Auslaßkanals. 10 durch Rückschlagventil 15 nur zunehmen, aber nicht abnehmen kann.

Wenn nun der Antriebsmotor der Flügelzellenpumpe fehlerhaft in die entgegengesetzte Drehrichtung verfällt, so liegen die sich vergrößernden Zellen im Bereich des Auslaßkanals 10. In diesen sich vergrößernden Zellen entsteht dadurch ein Vakuum, da der Auslaßkanal 10 durch Rückschlagventil 15 verschlossen ist. Dieses Vakuum besteht auch noch, wenn bei Weiterdrehung die entsprechende Flügelzelle den Saugkanal 9 überfährt. Deshalb wird - wegen Rückschlagventil 13 - durch Saugkanal 9 ein Vakuum gezogen, wenn das Vakuum in der Pumpe das Vakuum des Bremskraftverstärkers übersteigt. Wenn andererseits der Druck der sich verkleinernden Flügelzellen größer wird als der Druck vor dem Rückschlagventil 19 des zusätzlichen Auslaßkanals 18, so wird die Flügelzelle durch diesen Auslaßkanal 18 entleert.

Die Flügelzellenvakuumpumpe bleibt daher auch bei Falschlauf - zwar nicht mit ihrem normalen Wirkungsgrad - wohl aber in ausreichender Weise funktionsfähig.

## Patentansprüche

1. Flügelzellenvakuumpumpe mit zwei jeweils durch Rückschlagventil (15; 19) in Auslaßrichtung (16; 20) öffnenden Auslässen (10, 18), von denen jeweils einer zu beiden Seiten der Mantellinie des Gehäuses (6), an welcher der Rotor (2) und das Gehäuse (6) ihren kleinsten Abstand haben, angeordnet ist, und mit einem Einlaß (9) sowie mit einem Rotor (2), der in beiden Richtungen drehbar ist, dadurch gekennzeichnet, daß eine Drehrichtung (17) des Rotors (2) als Betriebsdrehrichtung vorgesehen ist, und daß der Einlaß (9) im Gehäuse (6) fest in dem Drehbereich des Rotors (2), in dem bei Betriebsdrehrichtung (17) eine Vergrößerung der Zellen stattfindet, liegt und mit einem Rückschlagventil (13) versehen ist, das in Einlaßrichtung (14) öffnet.

## Claims

Vane-cell vacuum pump having two outlets (10, 18) which each open in outlet direction (16; 20) through a check valve (15; 19) and are each disposed on either side of the generating line of the housing (6) at which the rotor (2) and the housing (6) are at their minimum distance from one another, and having an inlet (9) and a rotor (2) which is rotatable in both directions, characterised in that one direction of rotation (17) of the rotor (2) is provided as an operating direction of rotation, and in that the inlet (9) is located in the housing (6) permanently in the region of rotation of the rotor (2) in which, in the operating direction of rotation (17), an increase in the size of the cells occurs, and is provided with a check valve (13) which opens in inlet direction (14).

## Revendications

Pompe à vide à palettes comprenant deux sorties (10, 18) s'ouvrant chacune par un clapet anti-retour (15; 19) dans le sens de sortie, ces sorties étant disposées de part et d'autre de la génératrice du carter (6) sur laquelle le rotor (2) et le carter (6) présentent leur écartement minimal, et une entrée (9) ainsi qu'un rotor (2) qui peut tourner dans les deux sens, caractérisée en ce qu'un sens de rotation (17) du rotor (2) est prévu en tant que sens de rotation de service, et en ce que l'entrée (9) dans le carter (6) se trouve de manière fixe dans la zone de rotation du rotor (2) dans laquelle, en cas de rotation dans le sens de service (17), il se produit une augmentation du volume des cellules, et est munie d'un clapet anti-retour (13) qui s'ouvre dans le sens d'admission (14).